# EUROPEAN PATENT SPECIFICATION

(11) **EP 1 168 297 B1**
(45) Date of publication and mention of the grant of the patent: **06.12.2006**
(21) Application number: 01660131.2
(22) Date of filing: 29.06.2001
(51) Int. Cl.: G10L 13/04, G10L 13/02

(54) **Speech synthesis**
Sprachsynthese
Synthèse de la parole

(30) Priority: 30.06.2000 FI 20001572
(43) Date of publication of application: 02.01.2002
(73) Proprietor: Nokia Corporation, 02150 Espoo (FI)
(72) Inventor: Walker, Andrew, 00180 Helsinki (FI); Lamberg, Samu, 12400 Tervakoski (FI); Walker, Simon, 33500 Tampere (FI); Simelius, Kim, 33720 Tampere (FI)
(74) Representative: Derry, Paul Stefan

(56) References cited:
- EP-A- 0 901 000

## Description

This invention relates to speech synthesis and audible reading of text by artificial means.

A significant portion of communications has shifted from telephone calls and paper based messages to text messages in electronic form transmitted electronically, such as e-mail. Text messages in electronic form are received and displayed on computer displays and on other electrical and electronic displays. Using e-mail to prepare and send text messages is popular because it provides quick delivery to a potentially large number of recipients and can be prepared by computer, to which many people have access. In addition text messages can be readily stored and then read by their recipients when it is convenient.

Examples of text messages include e-mail text messages for display on computers and SMS (short message service) messages for display on mobile telephones. As digital convergence occurs, it is now becoming common for messages sent by one type of transmitting electronic device to be received by another type of electronic device. For example, e-mail text messages sent by a computer can be received and displayed by mobile telephones. Equally, mobile telephones can transmit e-mail text messages to computers or to other mobile telephones.

When such text messages are only sent from computer to computer, this causes no problems in their reading, even for relatively long text messages. This is because computer displays are large enough to present such text messages conveniently and because computer users are typically stationary and able to direct their attention to their computer displays. It is becoming common for text messages to be received by mobile communications devices such as mobile telephones. However, since these devices usually have displays which are small enough to enable the devices to be comfortably carried by a user it can be difficult for a user to read received text messages comfortably, especially if there is a large amount of text. Furthermore, with mobile communications devices, there can be problems in reading such text messages, for example whilst the user is travelling in a car or carrying out any other activity requiring the user's gaze to be directed elsewhere.

Due to these difficulties in delivery of text messages, information systems have been developed which are able to record verbal messages or to convert text into speech by means of speech synthesis.

In speech synthesis, the quality of the speech produced is highly dependent on the number of bytes used in a speech synthesis template which characterises the synthesised speech. Good quality speech synthesis may require a large amount of data for the speech synthesis template. In addition, a significant amount of computing power is required to produce the speech synthesis template. Such requirements are difficult to accommodate with mobile telephones. Moreover, generating the speech synthesis template is a time consuming task to perform for the speaker whose speech is to be synthesised. As a consequence, a device will usually only contain one speech synthesis template or at maximum a few speaker's speech synthesis templates to generate synthesised speech.

Japanese patent publication 11-219278 discloses a system in which users are able to have a virtual presence in a three-dimensional virtual space. If a user wishes to speak to another user, the user's speech is recognised, converted into a character-based message and then the character-based message is transmitted. On receipt, the character-based message is synthesised into speech and the synthesised speech is played to the other user. The speech synthesis is improved by applying tone and volume control in order to simulate a virtual distance between the speaker and the listener in the virtual space.

EP-A-0901000 relates to a message processing device which is adapted to obtain text data and read the text data aloud by using a voice synthesiser. The device stores a plurality of voice tones and allots one voice tone to one message and allots another voice tone to another message. The respective messages can be read in respective alloted voice tones. The type of tones which can be used are a high tone male voice, a low bass male voice, a high tone female voice, a low female voice, and a child's voice. Other voices are possible such as a robot voice. In the case that the number of senders of text messages exceeds the number of voice tones, the voice tones are "recycled", for example five voice tones are allotted to the first five text messages and then used again for the rest of the text messages.

According to a first aspect of the invention as claimed in claims 1-31 there is provided a communications device comprising:
a memory for storing a speech synthesis template for synthesising speech;
a message handler for sending a text message together with an identifier identifying the source of the text message to a recipient of the text message; and
a speech synthesis template handler for sending a copy of the speech synthesis template so that it is accessible by the recipient of the text message.

Preferably the communications device communicates with a communications network. It may communicate with other communications devices, such as the recipient, via the communications network.

Preferably the communication device comprises a message generator for generating the text message.

Preferably the speech synthesis template is sent to the recipient of the text message.

Preferably the speech synthesis template is specific to a designated user of the communications device in order to provide synthesised speech which sounds like the voice of the designated user.

Preferably the speech synthesis template handler is arranged to send the copy of the speech synthesis template to the recipient of the text message on demand. This may be as a consequence of demand by the recipient or demand by the network.

Preferably the communications device stores a record of the speech synthesis templates which have been sent and the recipient devices to which they have been sent. The communication device may comprise a checker which, on sending the text message, checks whether the speech synthesis template has already been sent to, or received by, the recipient. If the speech synthesis template has already been sent to, or received by, the recipient, the speech synthesis template handler may be arranged to send the speech synthesis template. This may happen automatically on sending to the text message.

Preferably the communications device has a request receiver for receiving a speech synthesis template sending request and the speech synthesis template handler is arranged to send the copy of the speech synthesis template to the recipient of the text message in response to the speech synthesis template sending request. The request may be sent by a recipient or by the communications network. Preferably the receiver is arranged to detect from the request a destination for the requested speech synthesis template and the speech synthesis template handler is arranged to send the speech synthesis template to the detected destination.

Preferably the communication device is a mobile device. Alternatively the communication device is in a fixed network. It may be a mobile telephone, a PDA (personal digital assistant) or a mobile, portable computer such as a laptop computer or a network terminal.

According to a second aspect of the invention there is provided a communications device comprising:
a memory for storing a speech synthesis template for synthesising speech;
a message receiver for receiving a text message together with an identifier
identifying the source of the text message; and
a speech synthesis template receiver for receiving a copy of the speech synthesis template corresponding to the source of the text message for artificially reading the text message using the copy of the speech synthesis template received.

According to a third aspect of the invention there is provided a communications system comprising a communications device and a network, the communications system comprising:
a memory for storing a speech synthesis template for synthesising speech;
a message handler for sending a text message together with an identifier identifying the source of the text message to a recipient of the text message; and
a speech synthesis template handler for sending a copy of a speech synthesis template to the recipient of the text message.
Preferably the network comprises a database for storing a plurality of speech synthesis templates. The database may store identifiers which correspond to the speech synthesis template. The speech synthesis templates may have been received from communications devices. Preferably the network comprises a speech synthesis template handler for sending the copy of the speech synthesis template to the communications device. This may be in response to a request for the speech synthesis template or may be at the initiative of the network or a server.

According to a fourth aspect of the invention there is provided a speech synthesis template server for storing a plurality of speech synthesis templates in a communications network, the server comprising:
a memory for storing speech synthesis templates for synthesising speech;
a memory for storing identifiers which identify the source of the speech synthesis templates; and
a speech synthesis template handler for sending a copy of a speech synthesis template to a communications device.

Preferably the server comprises a database for storing the plurality of speech synthesis templates. The speech synthesis templates may have been received from communications devices. Sending the copy of the speech synthesis template may be in response to a request for the speech synthesis template or may be at the initiative of the network or a server.

Preferably the communications device is the recipient of a text message which has been received from a party which is the source of a particular speech synthesis template.

According to a fifth aspect of the invention there is provided a method of converting a text message into synthesised speech, the method comprising the steps of:
storing a speech synthesis template for synthesising speech;
sending a text message together with an identifier identifying the source of the text message to a recipient of the text message; and
sending a copy of the speech synthesis template to the recipient of the text message.

According to a sixth aspect of the invention there is provided a method of converting a text message into synthesised speech, the method comprising the steps of:
storing a speech synthesis template for synthesising speech;
receiving a text message together with an identifier identifying the source of the text message;
receiving a copy of the speech synthesis template corresponding to the source of the text message; and
reading artificially the text message using the copy of the speech synthesis template received.

According to a seventh aspect of the invention there is provided a method of handling a plurality of speech synthesis templates, the method comprising the steps of:
receiving a text message together with an identifier identifying the source of the text message to a recipient of the text message;
receiving a speech synthesis template for synthesising speech; and
sending a copy of the speech synthesis template to the recipient of the text message.

Preferably the method comprises the step of storing the speech synthesis template. The speech synthesis template may be stored in the network. It may be stored in a server. It may be stored in a server according to the third aspect of the invention.

Preferably the method comprises the step of storing identifiers which correspond to the speech synthesis templates. Preferably, the speech synthesis templates may have been received from communications devices. Sending copies of the speech synthesis templates may be in response to a request for them by communications devices or by a network.

According to an eighth aspect of the invention there is provided a method of handling a plurality of speech synthesis templates, the method comprising the steps of:
storing a plurality of speech synthesis templates for synthesising speech;
storing identifiers which identify sources of the speech synthesis templates;
receiving an identifier; and
sending a copy of a speech synthesis template corresponding to the identifier to the recipient of a text message.

According to a ninth aspect of the invention there is provided a method of converting a text message into synthesised speech comprising the steps of:
associating a first speech synthesis template for synthesising speech having a first set of speech characteristics with text messages originating from a first specified source;
associating a second speech synthesis template for synthesising speech having a second set of speech characteristics with text messages originating from a second specified source, the first set of speech characteristics being distinguishable from the second set of speech characteristics;
receiving a text message;
checking the source from which the text message originates; and
synthesising speech according to one of the first speech synthesis template and the second speech synthesis template depending on the source from which the text message originates.

Preferably the specified sources identify specific individuals. Alternatively, the specified sources identify groups of individuals. In its most basic form, the groups can be male and female senders of text messages.

Preferably the speech synthesised by the second set of speech characteristics is distinguishable from the speech synthesised by the first set of speech characteristics by a human listener listening to the synthesised speech.

Preferably at least one of the first and second speech synthesis templates is transmitted by a network to a mobile communications device. Preferably the mobile communications device stores at least one speech synthesis template which is transmitted to it.

In radio telecommunications, channel bandwidth is limited and so it is not practical to transmit speech synthesis templates with electronic text messages. However, since recipients often receive electronic text messages again and again from the same people, it may be desirable for a receiving communications device (referred to in the following as a "recipient device") to have access to (and preferably to contain) speech synthesis templates which are used for synthesising the speech of users regularly sending text messages. In this way, it is not necessary always to send speech synthesis templates for certain speakers since they may already be stored in a device. Furthermore, it may be necessary only to send speech synthesis templates when they are really needed, that is when they are not already held. This is possible if the delivery system, such as a telecommunications network, takes into account cases where a copy of the speech synthesis template is already at the recipient device, or is accessible within the network and does not send the speech synthesis template in such cases. This may apply in the majority of cases.

In another method according to the invention, at least one speech synthesis template is stored in the network and speech synthesis by that speech synthesis template is carried out in the network and the resulting synthesised speech (or code to enable such synthesised speech) is transmitted to the communications device. In this way, it is not necessary for a recipient device to be sent and to store speech synthesis templates.

According to a tenth aspect of the invention there is provided a communications device for converting a received text message into synthesised speech comprising a memory for storing a first speech synthesis template for synthesising speech having a first set of speech characteristics and a second speech synthesis template for synthesising speech having a second set of speech characteristics, the first speech synthesis template being associated with a first specified source and the second speed synthesis template being associated with a second specified source, the first set of speech characteristics being distinguishable from the second set of speech characteristics, an identifying unit for checking the source from which the received text message originates and speech synthesis means for synthesising speech according to one of the first speech synthesis template and the second speech synthesis template depending on the source from which the received text message originates.

Preferably the identified speech synthesis template is used to generate synthesised speech according to the text message.

Preferably the communications device is a mobile communications device. Alternatively, the communications device is network-based. In an embodiment in which the invention relates to a wireless communication system, this means that the communications device is on the network side of an air interface across which the communications device and a communications network communicate.

According to an eleventh aspect of the invention there is provided a communication system comprising a network and a communications device according to the tenth aspect of the invention.

According to a twelfth aspect of the invention there is provided a computer program product comprising computer program code means for executing on a computer any of the methods of aspects five to nine.

The invention recognises that, in the future, it may be desired to handle text messages in electronic form and present the content of such text messages in synthesised speech rather than in textual form. It may be particularly desirable to synthesise speech which uses a speech synthesis template prepared according to the voice of a user sending the text message, typically by using a sending communications device (referred to in the following as a "sending device") so that the synthesised speech sounds like the voice of the user sending the text message.

Other aspects of the invention are computer programs comprising readable computer code for carrying out the steps of each of the methods according to the aspects of the invention. Each of the computer programs thus defined may be stored on a data carrier such as a floppy disc, a compact disc or in hardware.

The invention will be described, by way of example only, with reference to the accompanying drawings in which:
Figure 1 shows an embodiment of a communications system according to the invention;
Figure 2 shows a flowchart of a first method of the invention;
Figure 3 shows a flowchart of a second method of the invention;
Figure 4 shows a flowchart of a third method of the invention;
Figure 5 shows a flow chart of a fourth method of the invention;
Figure 6 shows synchronisation of speech synthesis templates; and
Figure 7 shows another embodiment of a communications system according to the invention.

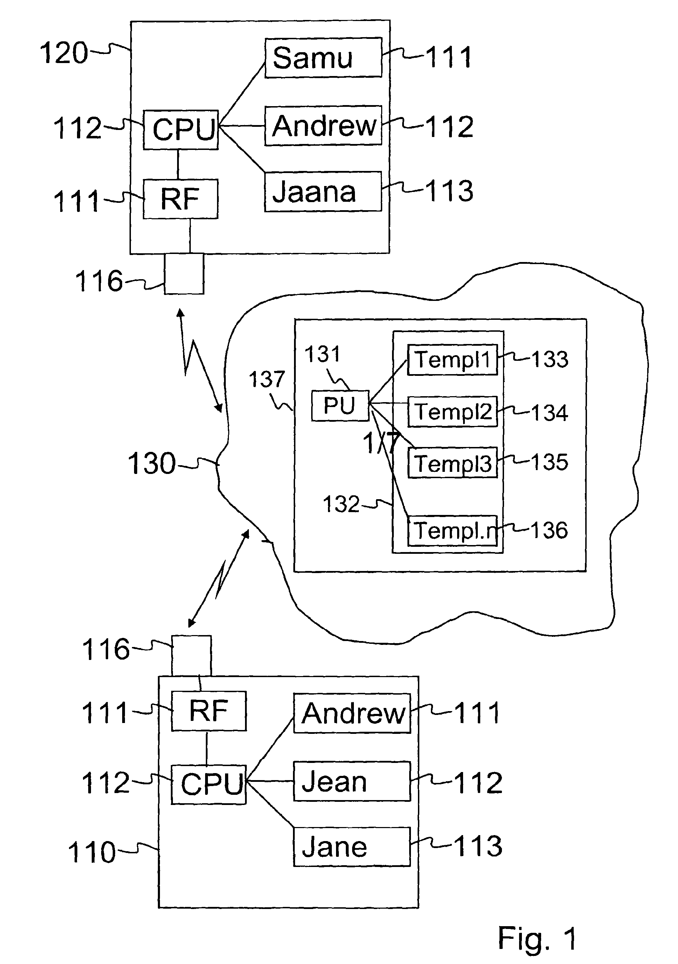

An embodiment of a communications system according to the invention is shown in Figure 1. The system comprises three main entities: a mobile telecommunications network 130, a sending device 110 and a recipient device 120. The sending device and the recipient device are connected to the mobile telecommunications network 130. They are identical devices and may be mobile communications devices such as mobile telephones. Each device comprises a central processing unit 124 controlling a first memory 111, a second memory 112 and a third memory 113 and further controlling a radio frequency block 115 coupled to an antenna 116. The memories 111, 112, and 113 are preferably such that they maintain their contents even if the device runs out of power. In the preferred embodiment the memories in the devices are semiconductor memories such as flash-RAM memories which do not have moving parts. The sending device 110 and the recipient device 120 communicate with the mobile telecommunications network 130 over radio channels.

The mobile telecommunications network 130 comprises a database 132 comprising a plurality of records 133, 134, 135 and 136 for maintaining speech synthesis templates for a plurality of network users. The database is controlled by a processing unit 131, which has access to each of the records 133, 134, 135 and 136. The database is preferably stored on a mass memory such as a hard disc or a set of hard discs. In combination, the database 132 and the processing unit 131 are part of a speech synthesis template server 137.

Operation of the communications system will now be described. When a user of a recipient device receives a text message, a choice is presented for the text message either to be shown displayed visually or to be audibly read so that the user can listen to the content of the text message. Of course, the user may elect to use both visual display and audible presentation although usually only one form of presentation is necessary. A default method of visual display is preferred. If the user chooses audible presentation, the recipient device checks the identity of the sender of the text message and then uses a speech synthesis template which is associated with the sender to present the content of the text message in an audible form which corresponds to the voice of the sender. If the speech synthesis template is not located in the recipient device, the recipient device obtains it either from the network or from the sending device via the network. In this way, the user is able to listen to text messages in voices which correspond to the senders of text messages. One advantage of this is that the user can discriminate between text messages depending upon the voices in which they are read or even identify the sender of a text message depending on the voice in which it is read.

When a sending device 110 first sends a text message to the network 130, the network will need to receive a speech synthesis template appropriate for that sending device 110. This is a speech synthesis template to generate speech which sounds like the user, or one of the users, of the sending device. The speech synthesis template is therefore sent (i) with the text message, (ii) at a later point in time decided by the sending device 110 or (iii) as a consequence of the network 130 requesting this (either at the time when the text message is received by the network 130 or at a later point in time). The speech synthesis templates are (i) stored by the network, (ii) stored by recipient devices or (iii) stored by the network and by recipient devices. The circumstances under which speech synthesis templates are sent depend on which of the following methods of the invention is being used. It is important to understand that the following methods relate to situations in which some speech synthesis templates may already have been sent by sending devices 110, received by the network 130 and then stored.

A first method of handling speech synthesis templates will now be described. The sending device 110 keeps a list of recipient devices 120 to which its speech synthesis template has been sent. In fact the sending device may have a primary speech synthesis template and secondary, or associated, speech synthesis templates. When sending a new text message to a particular recipient device 120, the sending device 110 checks whether the list shows that the recipient device 120 has already received the speech synthesis template. If the speech synthesis template has already been sent, then only the text message is sent. If the speech synthesis template has not already been sent, a copy of the speech synthesis template is attached to the text message and sent with it. When the recipient device 120 receives the speech synthesis template attached to the text message, the recipient device 120 stores it in a speech synthesis template memory. The speech synthesis template memory may be of any suitable kind such as a mass memory, flash-ROM, RAM or a disk/diskette. In case the recipient device 120 appears to have a speech synthesis template but does not, in fact, have it, the recipient device 120 may specifically request that it be sent. The way in which a speech synthesis template may be requested is described in the following.

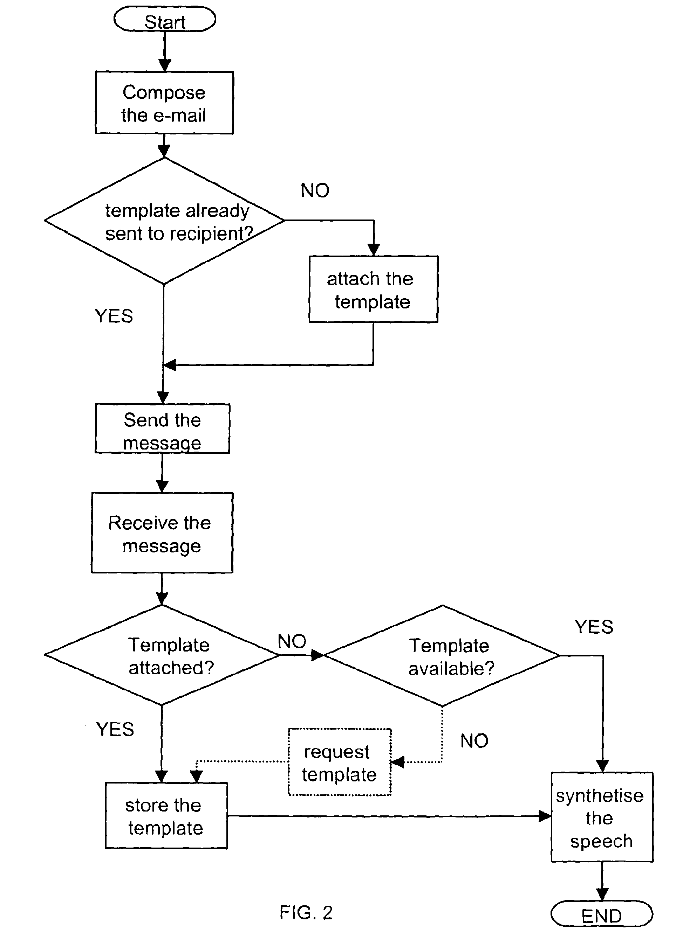

The first method is shown in Figure 2.

In a second method of handling speech synthesis templates, the sending device 110 does not send speech synthesis templates with a text message on initial sending of the text message. On receiving a text message which includes an appropriate identifier of the sending device 110, the recipient device 120 checks to see if an appropriate speech synthesis template for that sending device 110 has already been stored in its memory. If such a speech synthesis template has not been stored, the recipient device 120 requests that a copy of the speech synthesis template be sent. A circumstance in which the speech synthesis template may not be stored any longer is if speech synthesis templates are stored in a speech synthesis template memory (a kind of cache). As new speech synthesis templates are stored in the memory, old speech synthesis templates already stored in the memory are deleted to make space for the newer ones. Alternatively, the least-used speech synthesis templates may be deleted rather than the oldest ones. One or more old or little-used speech synthesis templates may be deleted at a time. Alternatively, or additionally, speech synthesis templates may have associated with them a lifetime and may be deleted when the lifetime expires. This speech synthesis template management system may be applied to the first or to any of the subsequent methods.

In this method a protocol is provided to enable a sending device 110 to be identified to the recipient device 120 and for the recipient device 120 to request the sending device's speech synthesis template and download it from the recipient device 120.

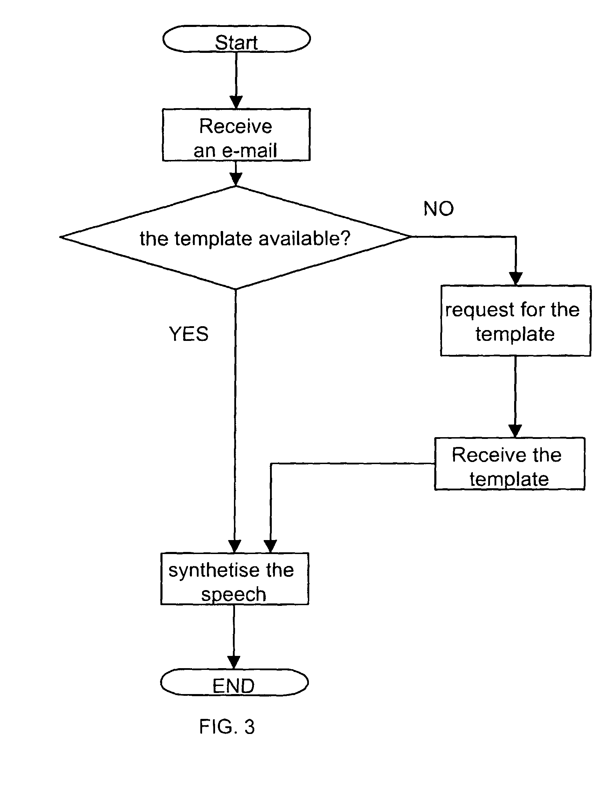

The second method is shown in Figure 3.

In a third method of handling speech synthesis templates, the functionality is similar to the second method. However, rather than only being stored in the sending and recipient devices, speech synthesis templates are stored on the speech synthesis template server 137. Speech synthesis templates are requested from the speech synthesis template server by a recipient device 120 rather than being requested from a sending device 110. To maintain the database in the speech synthesis template server there are several options. The network 130 can request a speech synthesis template in relation to the first text message which is sent by a sending device 110. Alternatively, the speech synthesis template server 137 can request the speech synthesis template (on demand) so that the first time the speech synthesis template is requested by a recipient device 120, the speech synthesis template server 137 further requests the appropriate speech synthesis template from the sending device 110 which sends a suitable copy. The speech synthesis template server 137 receives the copy, stores its own copy in its memory for future use and then sends a copy to the recipient device 120. In this way, the sending device 110 need not transmit the speech synthesis template over the radio path more than once. Furthermore, once the synthesis template has been stored in the speech synthesis template server 137, it can be transferred within one or more wired or mobile networks, for example the Internet.

The network 130 can intercept requests to sending devices 110 for speech synthesis templates and provide such templates if it already has them. If it does not already have them, it can allow the requests to continue on to the sending devices 110.

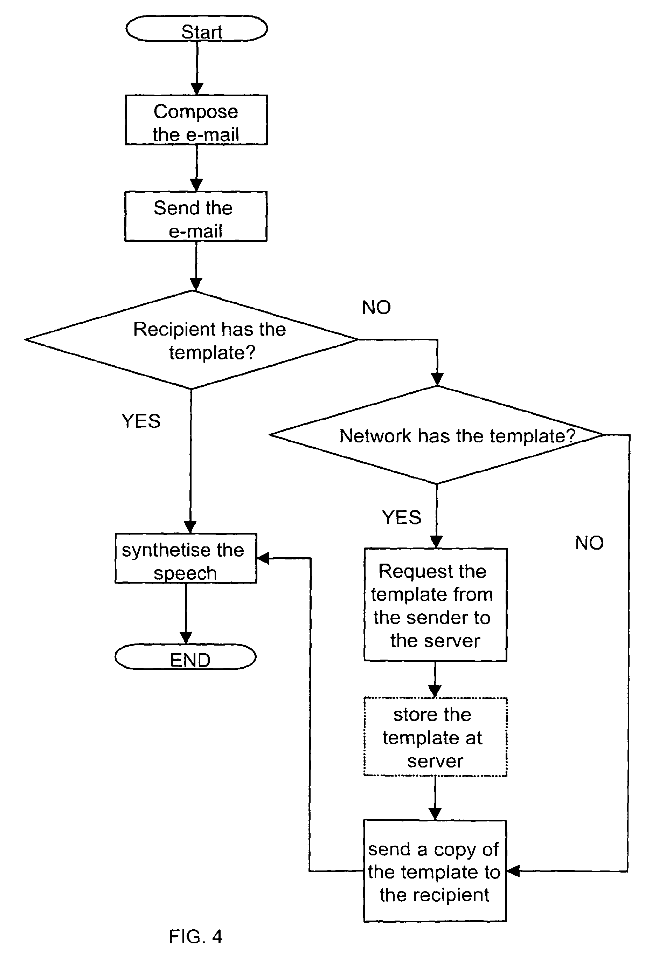

The third method is shown in Figure 4.

In a fourth method of handling speech synthesis templates, speech synthesis templates do not need to be transmitted to the recipient devices 120 at all. In this method, speech synthesis templates are transmitted to the network 130 from the sending devices 110 and then stored in the network 130. On requesting a text message to be presented in the form of synthesised speech, the necessary speech synthesis is carried out in the network 130 and synthesised speech is transmitted from the network to the recipient in suitably encoded form. The speech synthesis templates may be transmitted to the network 130 on transmission of a text message, or at the initiative of the sending device 110 or the network 130 as is described in the foregoing.

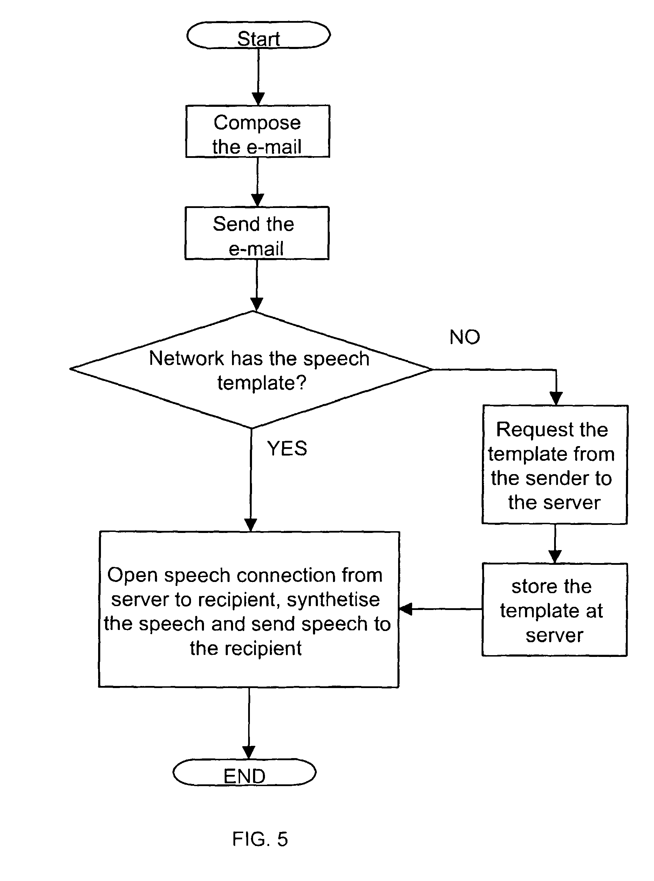

The fourth method is shown in Figure 5.

In its first and second methods, the invention may be implemented by software executed by the sending and recipient devices which controls a speech synthesis application in the sending device 110. This application manages a communications device's own speech synthesis template and speech synthesis templates which have been received from other communications devices and stored. The recipient device 120 includes a corresponding speech synthesis application. In the third method, the speech synthesis template server 137 has appropriate hardware in the network 130 to buffer the speech synthesis templates. This may be realised either within the network 130 or within a server which is attached to a fixed telecommunications network or to a communications network such as the Internet. In the fourth method, all of the functionality concerning speech synthesis templates and speech synthesis is within the network. The communications devices only require the ability to transmit and receive text messages and to request synthesised presentation of the text messages.

The third method is preferred over the first and second methods since it minimises the amount of data which needs to be transferred. On the other hand, the first and second methods do not require speech synthesis templates to be stored in the network 130 and might be preferred by people who prefer that their speech synthesis templates are not available to the public. However, it is possible to provide encryption protection in these cases as is described in the following. The first and second methods do not require support from the network 130 other than the forwarding of speech synthesis templates. The fourth method enables receiving of spoken messages even with devices which are not able to receive speech synthesis templates.

For those methods in which the speech synthesis templates are transmitted to the communications devices, it should be understood that this does not have to be at the time that the text message is transmitted or is to be presented to the user of the recipient device 120. Initially a text message could be read out using a default speech synthesis template, perhaps the speech synthesis template for the user of the recipient device 120, and a new speech synthesis template could be received at a more appropriate time, for example at a off-peak time to preserve bandwidth. The recipient device 120 can automatically retrieve the new speech synthesis template at an appropriate time, for example when the recipient device 120 is not being used. Alternatively, the recipient device 120 may request an off-peak delivery from the network 130 so that the network 130 sends the requested speech synthesis template at its own convenience. The speech synthesis template may be segmented on transmission and re-assembled on reception.

In all of the preceding embodiments distribution of speech synthesis templates may occur as a result of a synchronisation operation. The devices 110 and 120 may, from time to time, not be in communication with the network 130, for example, they may be switched off or set to be in an off-line operation mode. When communication is re-established, it may be desirable to synchronise data held in the devices with data held in the network 130.

When synchronisation is started, for example when calendar items are being synchronised, at the same time devices connected to the network 130 can request from the speech synthesis template server 137 new templates. This may be done if it is noticed that any of the devices hold messages, for example which have just been received from a sending device or sending devices, for which a template is not held. Such synchronisation can occur by use of synchronisation mark-up language (SyncML) as will be understood by those skilled in the art. The speech synthesis templates may be taken from the "library" of speech synthesis templates of the third aspect of the invention.

The templates may be downloaded from any synchronisation source available to the user, for example by using a local connection (such as hardwired, low power radio frequency, infra-red, Bluetooth, WLAN) with the user's PC. In this way, expensive and time-consuming over-the-air downloads are avoided.

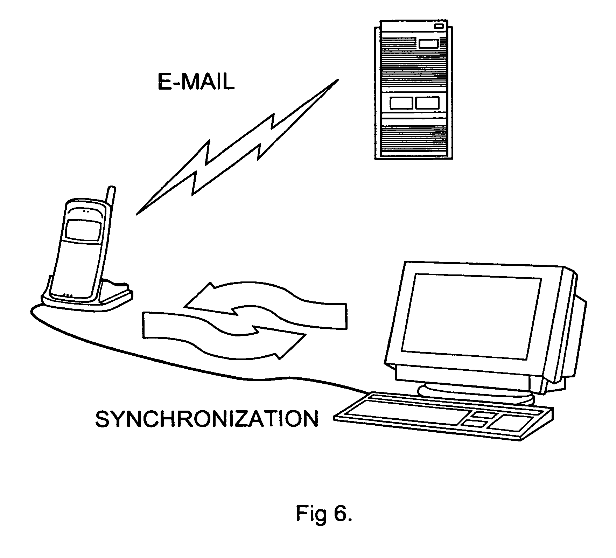

Figure 6 shows synchronisation of speech synthesis templates according to the invention. A recipient device receives text messages such as e-mails over the air. Subsequently, the device is plugged into a desktop stand which has a hardwired connection to the user's PC. As a part of normal data synchronization, for example updating calendar data from an office calendar, the recipient device receives those speech synthesis templates which it requires to synthesise the newly received text messages into speech.

As the recipient device requests synchronization from a synchronization server, it sends in the request data concerning those speech synthesis templates which it requires. The required speech synthesis templates are determined by comparing the newly received e-mails contained by the recipient device to the speech synthesis templates held by the recipient device. The synchronization server processes the request by the recipient device and provides the speech synthesis templates either from its own memory or from an external server.

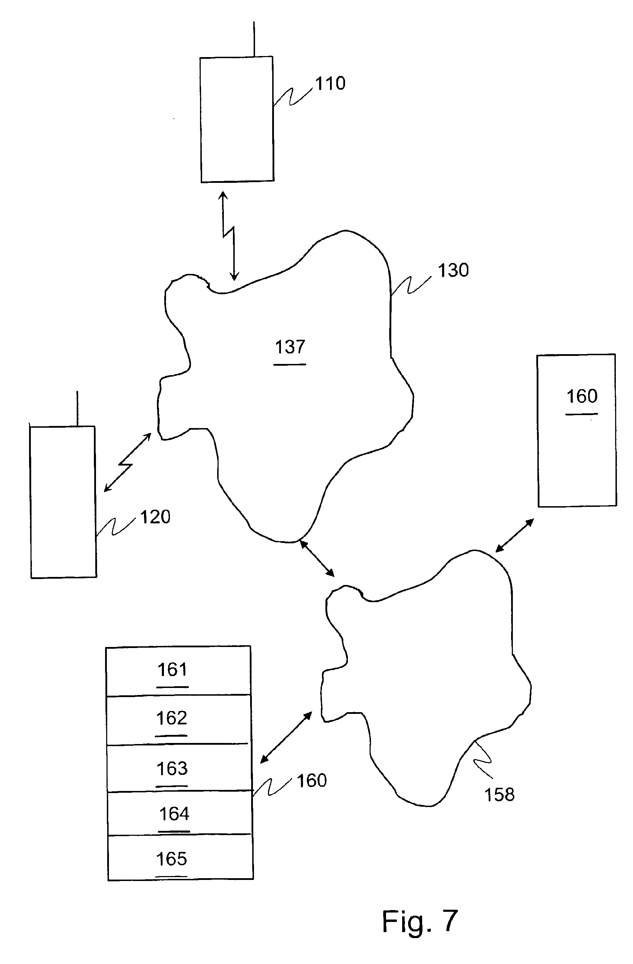

In addition to adding speech synthesis templates, synchronisation may involve removal of one or more templates in order to free some memory of the device being synchronised. Determination of which speech synthesis templates are required is carried out by the recipient device in the process of determining the synchronisation data set. The recipient device may intelligently decide the data set to be synchronised based on the relevance of the data to be synchronised. The relevance of a particular speech synthesis template would, for example, be determined by the number of e-mails received from the person whose voice the speech synthesis template represents.Figure 7 shows a communications system for handling speech synthesis templates. It provides a way for acquiring speech synthesis templates and storing them on a speech synthesis template server.

Figure 6 has features in common with Figure 1 and corresponding reference numerals have been applied to features which are common to both systems. Speech synthesis templates are stored in the speech synthesis template server 137. However, rather than only being obtained from sending devices 110, they are obtained from speech synthesis template creation entities 160 via a network 158 such as an intranet or the Internet.

The speech synthesis template creation entities 160 are network terminals equipped with speech synthesis template creation software. These entities may comprise personal computers. A single entity 160 comprises audio capture equipment 160 for audio capture. The audio capture equipment has a microphone and an associated analogue-to-digital converter for digitising captured speech. Digitised captured speech is stored on a hard drive 162. Speech synthesis template creation software 165 creates a speech synthesis template by analysing the digitised captured speech stored on the hard drive 162. The software 165 may also be stored in the hard drive 162.

The entity 160 also comprises a network adaptor 163 to enable connection of the entity 160 to the network and a user interface 164. The user interface 164 enables a user to have access to and to operate the software 165.

The operation of the communications system will now be described. Typically the network terminal 160 is a user's personal computer. If a user desires to make his speech synthesis template generally accessible (so that it can be obtained by recipients of text messages from him), the user activates the software 165 and follows various speaking and teaching exercises which are required. This usually involves repetitions of sounds, words and phrases. Once a speech synthesis template has been created, the user can send it to the speech synthesis template server 137. This server is typically under control of the operator of the network 130.

Alternatively the network terminal 160 is provided by and under the control of a service provider. In this case, the user may generate a speech synthesis template when it is convenient or necessary. For example, one convenient time to generate a speed synthesis template is on establishment of a new connection to the network 130, for example on purchasing a mobile telephone.

Once the server 137 contains speech synthesis templates, they may be obtained by recipients of text messages who request a corresponding speech synthesis template so that the text message may be read out. Each time the server 137 is used to provide a speech synthesis template, a charge may be levied against the party requesting the speech synthesis template.

It will be appreciated that a common purpose of all of the methods is to send the speech synthesis templates only where it is necessary, for example at the initiative of the network 130 or in response to a demand from a communications device.

A convenient way of generating the speech synthesis templates will now be described. This involves teaching the speech synthesis templates the specific characteristics of the voice to be synthesised so that it can be reproduced.

In one embodiment, the communication devices generate text messages by voice recognition. In order to preserve memory space, a communication device has a combined speech recognition/synthesis application program. This application program is able to recognise the speech and convert it into text. Although speech recognition is already known from the prior art (requiring the use of either speaker dependent or speaker-independent speech recognition templates), the invention proposes that pre-existing speech recognition functionality is used additionally for converting text into speech. In this way, using pre-existing speech recognition templates, the user of a communications device would not have to spend time teaching the device to recognise and to synthesise his speech as an a individual and separate activity but such teaching can be combined both for speech recognition and for speech synthesis.

In situations in which speech recognition is used to produce the text messages rather than, say, typing, when the sending device 110 is learning to recognise the sender's speech, in order to generate the speech synthesis template relatively quickly, at least the first text which a reader is to read may be presented to the sender in a way in which certain words which have greater than a certain probability of being incorrect are emphasised and confirmation or correction of these words is prompted. Such confirmation or correction is incorporated into the learning process involved in generating the speech synthesis template so that it is able to be generated more effectively.

It should be understood that the speech synthesis templates do not necessarily need to be those belonging to users of the sending device 110. All that is necessary is that they should distinguish between users when they are listened to. They can be chosen by the user of the recipient device 120 and may be "joke" speech synthesis templates, for example those to synthesise speech of cartoon characters. Alternatively there may be two speech synthesis templates, one for a male speaker and one for a female speaker. A gender indicator sent with a text message can ensure that the text message is spoken by a synthesised voice having the correct gender. One way of doing this is to check the forename of a user using the sending device and using this to determine the gender. Other discriminators could be used such as to have speech synthesis templates representing young and old voices.

As storage of a speaker's speech synthesis template could potentially enable fraudulent messages to be presented using someone else's "voice" it may be preferred to include some sort of digital signature in the speech synthesis templates (perhaps as an embedded signature) so that only the user who is the source of the speech synthesis template can use it legitimately. In one embodiment this is based on a two-key encryption system, in which the speech synthesis template generates one key and new text messages are provided with a second key. An encryption algorithm is used by the recipient device to check that the keys match with the content of the text message and thus to authenticate the source of the text message. These security aspects are not such a problem in methods, such as the fourth method, in which the speech synthesis templates are not transferred to communications devices.

If a text message comes from a number of people, a number of speech synthesis templates could be sent, so that different parts of the text message could be read out using different voices depending on the sources of the different parts of the text. In this case, source identifiers can be embedded in the beginning of a new source's portion in the text message. The case may apply to text messages which have been received by a number of recipients, all of whom have contributed some text, and then sent onwards. Such a text message may be an e-mail which has been received and forwarded or replied to one or more times.

The invention can be used on wired communication paths as well as on wireless ones, so that the invention can be used, for example, in cases where one or both parties are connected to an intranet or the Internet. In this case the sending device 110 and the recipient device 120 would not be mobile communications devices but would be fixed communications devices such as PCs (personal computers).

The speech synthesis templates of employees of an enterprise, for example all 1000 employees of a company, can be pre-programmed into the memories of communications devices used by the employees so as to avoid transmitting the speech synthesis templates unnecessarily. Equally, the speech synthesis templates may be stored in a company-run server from which they may be supplied to the communications devices.

The invention concerns a way of synthesising speech with the voice of a user. It also concerns a way of providing different synthesised voices for different users sending text messages. It is concerned with dealing with speech synthesis templates so that they can be made available for use by a communications device, either by transmitting them from one device to another or by transmitting them from a network to a device.

With the invention it becomes possible to send text messages which consume low bandwidth and have them spoken in a way to identify their sources. It provides a way of producing synthesised speech which is personal, or at least distinguishable between different sources. The invention enables such "spoken text messages" to be sent as simply as e-mail are sent at the moment. It also provides a way to enable provision of personalised speech synthesis templates whilst consuming low bandwidth in their transfer. This is especially the case in a method of the invention in which speech synthesis templates are only sent once. One advantage provided by the invention is that the text messages are still stored as plain text, which means that their storage uses little memory space compared to storing actual speech. Furthermore, it is relatively easy to search text messages with keywords.

Speech synthesis templates can also be put to other uses. In one embodiment, they are used to generate speech messages for answering machines, for example, a number of speech synthesis templates may be available which are able to synthesise the speech of people the sound of whose voices are generally known to the population. These people may be television personalities, actors, sportsmen, entertainers and the like. Such speech synthesis templates may be kept in a network-based library of speech synthesis templates. The speech synthesis templates are functionally connected to a suitable processor which is able to generate speech according to any speech synthesis templates which are selected. The library and the processor are conveniently co-located in a network based server. If a subscriber desires to have an answering message on his voice mail box, the subscriber sends a message to the server including text which is to form the basis of the answering message and indicating the voice in which the answering message is to be spoken and the voice mail box to which the answering message is to be applied. The processor uses an appropriate speech synthesis template to generate the synthesised answering message and the message is then transmitted to a memory associated with the voice mail box. When a call is made which leads to activation of the answering message of the voice mail box, the memory is accessed and the synthesised answering message is played to the caller. In another, refined embodiment, the operation is as in the foregoing but the subscriber sends the message not directly to the server but via his or her own telecommunications network operator. The operator can then authenticate and invoice the subscriber for the service thus removing the need for implementing any separate authentication and invoicing systems for collecting users (subscribers) of the service.

Particular implementations and embodiments of the invention have been described. It is clear to a person skilled in the art that the invention is not restricted to details of the embodiments presented above, but that it can be implemented in other embodiments using equivalent means without deviating from the characteristics of the invention. The scope of the invention is only restricted by the attached patent claims.

## Claims

1. A communications device comprising:
a memory for storing a plurality of speech synthesis templates for synthesising speech, the templates comprising respective sets of speech characteristics prepared according to the voices of respective specific individuals;
a message handler for receiving a text message from a sender together with an identifier identifying at least one speech synthesis template to be used for converting the text message into synthesised speech;
a speech synthesiser for converting the text message into synthesised speech using the at least one identified speech synthesis template; and
an output to provide the synthesised speech in an audible form which corresponds to the voice of the sender.

2. A communications device according to claim 1 wherein the identifier identifies the source of the text message.

3. A communications device according to claim 1 or claim 2 comprising a speech synthesis template handler for receiving a copy of the at least one identified the speech synthesis templates.

4. A communications device according to any preceding claim, comprising a speech synthesis template handler which is arranged to send a speech synthesis template to one of the following: a communications device, a communications network and a server.

5. A communications device according to claim 4 wherein the speech synthesis template handler is arranged to send the speech synthesis template when it is requested by one of the following: a communications device, a communications network and a server.

6. A communications device according to claim 4 or claim 5 wherein the speech synthesis template handler is capable of sending a speech synthesis template which is specific to a designated user of the communications device.

7. A communications device according to any of claims 4, 5 and 6 comprising a transmitter to transmit a text message and a copy of the speech synthesis template to a recipient of the text message.

8. A communications device according to any preceding claim comprising a speech handler for artificially reading the text message as synthesised speech using the at least one identified speech synthesis template.

9. A communications device according to any preceding claim comprising a transmitter to transmit the synthesised speech over a data communications link.

10. A communications device according to any preceding claim comprising a synchronisation unit to transmit synchronisation information between the communications device and a communications network to synchronise data held in the memory with data held in the communications network.

11. A communications device according to any preceding claim comprising a message generator for generating a text message.

12. A communications device according to any preceding claim which is a mobile device.

13. A communications device according to any of claims 1 to 11 which is a based within a communications network.

14. A communications device according to claim 13 comprising a server.

15. A communications device according to any preceding claim comprising a database for storing a plurality of speech synthesis templates.

16. A communications device according to claim 15 wherein the database is arranged to store identifiers which each correspond to one speech synthesis template and one source.

17. A communications device according to any preceding claim which is capable of transmitting data over a wireless data communications link.

18. A communications system comprising a communications device and a communications network, the communications system comprising:
a memory for storing a plurality of speech synthesis templates for synthesising speech, the templates comprising respective sets of speech characteristics prepared according to the voices of respective specific individuals;
a message handler for receiving a text message from a sender together with an identifier identifying at least one speech synthesis templates which is to be used for converting the text message into synthesised speech;
a speech synthesiser for converting the text message into synthesised speech using the at least one identified speech synthesis templates; and
an output to provide the synthesised speech in an audible form which corresponds to the voice of the sender.

19. A communications system according to claim 18 comprising corresponding synchronisation units in the communications device and the communications network to enable data stored in the communication network to be synchronised with data stored in the communications device.

20. A communications system according to claim 18 or claim 19 comprising a speech synthesis template handler for receiving a copy of the at least one identified the speech synthesis templates.

21. A communications system according to any of claims 18 to 20 which is capable of transmitting data over a wireless data communications link between the communications network and the communications device.

22. A method of converting a text message into synthesised speech, the method comprising the steps of:
storing a plurality of speech synthesis templates for synthesising speech, the templates comprising respective sets of speech characteristics prepared according to the voices of respective specific individuals;
converting a text message into synthesised speech using the at least one identified speech synthesis template, the text message having been received from a sender together with an identifier identifying at least one speech synthesis template which is to be used for converting the text message into synthesised speech; and
generating the synthesised speech in a form which corresponds to the voice of the sender.

23. A method according to claim 22 in which the identifier identifies the source of the text message.

24. A method according to claim 22 or claim 23 comprising the step of receiving a copy of the identified speech synthesis template.

25. A method according to any of claims 22 to 24 comprising the step of artificially reading the text message in synthesised speech using the identified speech synthesis template.

26. A method according to any of claims 22 to 25 comprising the step of transmitting the synthesised speech over a data communications link.

27. A method according to any of claims 22 to 26 comprising the step of sending a text message and a copy a speech synthesis template to a recipient of the text message.

28. A method according to any of claims 22 to 27 comprising the step of transmitting synchronisation information between a communications device and a communications network to synchronise data held in the communications device with data held in the communications network.

29. A method according to any of claims 22 to 28 comprising the step of transmitting data over a wireless data communications link.

30. A computer program product for converting a text message into synthesised speech when said computer program product is run on a computer, the computer program product comprising:
computer executable code for causing the computer to store a plurality of speech synthesis templates for synthesising speech, the templates comprising respective sets of speech characteristics prepared according to the voices of respective specific individuals;
computer executable code for causing the computer to receive a text message from a sender together with an identifier identifying which of the plurality of speech synthesis templates is to be used for converting the text message into synthesised speech;
computer executable code for causing the computer to convert the text message into synthesised speech using a selected one of the speech synthesis templates; and
computer executable code for causing the computer to output the synthesised speech in a signal to be played in an audible form which corresponds to the voice of the sender.

31. A computer program product according to claim 30 which is stored on a computer readable medium.

## Patentansprüche

1. Kommunikationsvorrichtung, umfassend
- einen Speicher zum Speichern von mehreren Sprachsynthese-Templates zum Synthetisieren von Sprache, wobei die Templates jeweilige Sätze von Sprachmerkmalen umfassen, die gemäß der Stimmen der jeweiligen bestimmten Individuen erstellt werden;
- einen Nachrichten-Handhaber zum Empfangen einer Textnachricht von einem Sender zusammen mit einer Kennung, die mindestens ein Sprachsynthese-Template identifiziert, das zur Konvertierung der Textnachricht in synthetisierte Sprache verwendet werden soll;
- eine Sprachsynthetisiereinheit zum Konvertieren der Textnachricht in synthetisierte Sprache unter Verwendung des mindestens einen identifizierten Sprachsynthese-Templates; und
- eine Ausgabe, um die synthetisierte Sprache in einer akustischen Form bereitzustellen, die der Stimme des Senders entspricht.

2. Kommunikationsvorrichtung gemäß Anspruch 1, wobei die Kennung die Quelle der Textnachricht identifiziert.

3. Kommunikationsvorrichtung gemäß Anspruch 1 oder Anspruch 2, umfassend einen Sprachsynthese-Template-Handhaber zum Empfangen einer Kopie des mindestens einen identifizierten Sprachsynthese-Templates.

4. Kommunikationsvorrichtung gemäß einem der vorangegangenen Ansprüche, umfassend einen Sprachsynthese-Template-Handhaber, der eingerichtet ist, ein Sprachsynthese-Template zu einem der folgenden zu senden: eine Kommunikationsvorrichtung, ein Kommunikationsnetzwerk und ein Server.

5. Kommunikationsvorrichtung gemäß Anspruch 4, wobei der Sprachsynthese-Template-Handhaber eingerichtet ist, das Sprachsynthese-Template zu senden, wenn es von einem der folgenden angefragt wird: eine Kommunikationsvorrichtung, ein Kommunikationsnetzwerk und ein Server.

6. Kommunikationsvorrichtung gemäß Anspruch 4 oder Anspruch 5, wobei der Sprachsynthese-Template-Handhaber imstande ist, ein Sprachsynthese-Template zu senden, das auf einen bestimmten Benutzer der Kommunikationsvorrichtung zugeschnitten ist.

7. Kommunikationsvorrichtung gemäß einem der Ansprüche 4, 5 und 6, umfassend eine Übermittlungseinheit, um die Textnachricht und eine Kopie des Sprachsynthese-Templates an einem Empfänger der Textnachricht zu übermitteln.

8. Kommunikationsvorrichtung gemäß einem der vorangegangenen Ansprüche, umfassend einen Sprachhandhaber zum Maschinenlesen der Textnachricht als synthetisierte Sprache unter Verwendung von mindestens einem identifizierten Sprachsynthese-Template.

9. Kommunikationsvorrichtung gemäß einem der vorangegangenen Ansprüche, umfassend eine Übermittlungseinheit zum Übermitteln der synthetisierten Sprache über eine Datenkommunikationsverbindung.

10. Kommunikationsvorrichtung gemäß einem der vorangegangenen Ansprüche, umfassend eine Synchronisiereinheit um Synchronisierinformationen zwischen der Kommunikationsvorrichtung und einem Kommunikationsnetzwerk zu übermitteln, um Daten, die in dem Speicher gehalten werden, mit Daten, die in dem Kommunikationsnetzwerk gehalten werden, zu synchronisieren.

11. Kommunikationsvorrichtung gemäß einem der vorangegangenen Ansprüche, umfassend eine Nachrichtenerzeugungseinheit zum Erzeugen einer Textnachricht.

12. Kommunikationsvorrichtung gemäß einem der vorangegangenen Ansprüche, die eine Mobilvorrichtung ist.

13. Kommunikationsvorrichtung gemäß einem der Ansprüche 1 bis 11, die eine Basis innerhalb eines Kommunikationsnetzwerkes ist.

14. Kommunikationsvorrichtung gemäß Anspruch 13, umfassend einen Server.

15. Kommunikationsvorrichtung gemäß einem der vorangegangenen Ansprüche, umfassend eine Datenbank zum Speichern von mehreren Sprachsynthese-Templates.

16. Kommunikationsvorrichtung gemäß Anspruch 15, wobei die Datenbank eingerichtet ist, um Kennungen zu speichern, die jeweils einem Sprachsynthese-Template und einer Quelle entsprechen.

17. Kommunikationsvorrichtung gemäß einem der vorangegangenen Ansprüche, die imstande ist, Daten über eine drahtlose Datenkommunikationsverbindung zu übermitteln.

18. Kommunikationssystem, umfassend eine Kommunikationsvorrichtung und ein Kommunikationsnetzwerk, wobei das Kommunikationssystem umfasst:
- einen Speicher zum Speichern von mehreren Sprachsynthese-Templates zum Synthetisieren von Sprache, wobei die Templates jeweilige Sätze von Sprachmerkmalen umfassen, die gemäß der Stimmen der jeweiligen bestimmten Individuen erstellt werden;
- einen Nachrichten-Handhaber zum Empfangen einer Textnachricht von einem Sender zusammen mit einer Kennung, die mindestens ein Sprachsynthese-Template identifiziert, das zur Konvertierung der Textnachricht in synthetisierte Sprache verwendet werden soll;
- eine Sprachsynthetisiereinheit zum Konvertieren der Textnachricht in synthetisierte Sprache unter Verwendung der mindestens einen identifizierten Sprachsynthese-Templates; und
- eine Ausgabe, um die synthetisierte Sprache in einer akustischen Form bereit zu stellen, die der Stimme des Senders entspricht.

19. Kommunikationssystem gemäß Anspruch 18, umfassend entsprechende Synchronisiereinheiten in der Kommunikationsvorrichtung und dem Kommunikationsnetzwerk, um zu ermöglichen, dass Daten, die in dem Kommunikationsnetzwerk gespeichert sind, mit Daten, die in der Kommunikationsvorrichtung gespeichert sind, synchronisiert werden.

20. Kommunikationsvorrichtung gemäß Anspruch 18 oder Anspruch 19, umfassend einen Sprachsynthese-Template-Handhaber zum Empfangen einer Kopie des mindestens einen identifizierten Sprachsynthese-Templates.

21. Kommunikationssystem gemäß einem der Ansprüche 18 bis 20, die imstande ist Daten über eine drahtlose Datenkommunikationsverbindung zwischen dem Kommunikationsnetzwerk und der Kommunikationsvorrichtung zu übermitteln.

22. Verfahren zum Konvertieren einer Textnachricht in synthetisierte Sprache, wobei das Verfahren die Schritte umfasst:
- Speichern von mehreren Sprachsynthese-Templates zum Synthetisieren von Sprache, wobei die Templates jeweilige Sätze von Sprachmerkmalen umfassen, die gemäß der Stimmen der jeweiligen bestimmten Individuen erstellt werden;
- Konvertieren einer Textnachricht in synthetisierte Sprache unter Verwendung des mindestens einen identifizierten Sprachsynthese-Templates, wobei die Textnachricht von einem Sender zusammen mit einer Kennung empfangen wurde, die mindestens ein Sprachsynthese-Template identifiziert, das zur Konvertierung der Textnachricht in synthetisierte Sprache verwendet werden soll und
- Erzeugen der synthetisierten Sprache in einer Form, die der Stimme des Senders entspricht.

23. Verfahren gemäß Ansprüche 22, wobei die Kennung die Quelle der Textnachricht identifiziert.

24. Verfahren gemäß Anspruch 22 oder Anspruch 23, umfassend den Schritt des Empfangens einer Kopie des identifizierten Sprachsynthese-Templates.

25. Verfahren gemäß einem der Ansprüche 22 bis 24, umfassend den Schritt des Maschinenlesens der Textnachricht als synthetisierte Sprache unter Verwendung des identifizierten Sprachsynthese-Templates.

26. Verfahren gemäß einem der Ansprüche 22 bis 25, umfassend den Schritt des Übermittelns der synthetisierten Sprache über eine Datenkommunikationsverbindung.

27. Verfahren gemäß einem der Ansprüche 22 bis 26, umfassend den Schritt des Sendens einer Textnachricht und einer Kopie des Sprachsynthese-Templates an einen Empfänger der Textnachricht.

28. Verfahren gemäß einem der Ansprüche 22 bis 27, umfassend den Schritt des Übermittelns von Synchronisierinformationen zwischen der Kommunikationsvorrichtung und einem Kommunikationsnetzwerk, um Daten, die in der Kommunikationsvorrichtung gehalten werden, mit Daten die in dem Kommunikationsnetzwerk gehalten werden, zu synchronisieren.

29. Verfahren gemäß einem der Ansprüche 22 bis 28, umfassend den Schritt des Übermittelns von Daten über eine drahtlose Datenkommunikationsverbindung.

30. Computerprogrammprodukt zum Konvertieren einer Textnachricht in synthetisierte Sprache, wenn das Computerprogrammprodukt auf einem Computer ausgeführt wird, wobei das Computerprogrammprodukt umfasst:
- computerausführbaren Code, um zu bedingen, dass der Computer mehrere Sprachsynthese-Templates zum Synthetisieren von Sprache speichert, wobei die Templates jeweilige Sätze von Sprachmerkmalen umfassen, die gemäß der Stimmen der jeweiligen bestimmten Individuen erstellt werden;
- computerausführbaren Code, um zu bedingen, dass der Computer eine Textnachricht von einem Sender zusammen mit einer Kennung empfängt, die identifiziert, welche der mehreren Sprachsynthese-Templates zur Konvertierung der Textnachricht in synthetisierte Sprache verwendet werden soll;
- computerausfiihrbaren Code, um zu bedingen, dass der Computer die Textnachricht in synthetisierte Sprache unter Verwendung einer Ausgewählten der identifizierten Sprachsynthese-Templates konvertiert; und
- computerausführbaren Code, um zu bedingen, dass die synthetisierte Sprache in ein Signal ausgegeben wird, das in einer akustischen Form gespielt werden kann, die der Stimme des Senders entspricht.

31. Computerprogrammprodukt gemäß Anspruch 30, das auf einem computerlesbaren Medium gespeichert wird.

## Revendications

1. Dispositif de communications comprenant :
une mémoire destinée à mémoriser une pluralité de gabarits de synthèse de la parole destinés à synthétiser de la parole, les gabarits comprenant des ensembles respectifs de caractéristiques de paroles préparés conformément aux voix d'individus spécifiques respectifs,
un gestionnaire de messages destiné à recevoir un message de texte d'un expéditeur en même temps qu'un identificateur identifiant au moins un gabarit de synthèse de la parole devant être utilisé pour convertir le message de texte en parole synthétisée, un synthétiseur de la parole destiné à convertir le message de texte en parole synthétisée en utilisant le au moins un gabarit de synthèse de la parole identifié, et
une sortie destinée à procurer la parole synthétisée sous une forme audible qui correspond à la voix de l'expéditeur.

2. Dispositif de communications selon la revendication 1, dans lequel l'identificateur identifie la source du message de texte.

3. Dispositif de communications selon la revendication 1 ou la revendication 2 comprenant un gestionnaire de gabarits de synthèse de la parole destiné à recevoir une copie du au moins un gabarit de synthèse de la parole identifié.

4. Dispositif de communications selon l'une quelconque des revendications précédentes, comprenant un gestionnaire de gabarits de synthèse de la parole qui est conçu pour envoyer un gabarit de synthèse de la parole à l'un des dispositifs suivants : un dispositif de communications, un réseau de communications et un serveur.

5. Dispositif de communications selon la revendication 4, dans lequel le gestionnaire de gabarits de synthèse de la parole est conçu pour envoyer le gabarit de synthèse de la parole lorsqu'il est demandé par l'un des dispositifs suivants : un dispositif de communications, un réseau de communications et un serveur.

6. Dispositif de communications selon la revendication 4 ou la revendication 5, dans lequel le gestionnaire de gabarits de synthèse de la parole peut envoyer un gabarit de synthèse de la parole qui est spécifique à l'utilisateur désigné du dispositif de communications.

7. Dispositif de communications selon l'une quelconque des revendications 4, 5 et 6 comprenant un émetteur destiné à transmettre un message de texte à une copie du gabarit de synthèse de la parole à un destinataire des messages de texte.

8. Dispositif de communications selon l'une quelconque des revendications précédentes, comprenant un gestionnaire de la parole destiné à lire artificiellement le message de texte sous la forme de parole synthétisée en utilisant le au moins un gabarit de synthèse de la parole identifié.

9. Dispositif de communications selon l'une quelconque des revendications précédentes, comprenant un émetteur destiné à transmettre la parole synthétisée sur une liaison de communications de données.

10. Dispositif de communications selon l'une quelconque des revendications précédentes, comprenant une unité de synchronisation destinée à transmettre des informations de synchronisation entre le dispositif de communications et un réseau de communications afin de synchroniser des données conservées dans la mémoire avec des données conservées dans le réseau de communications.

11. Dispositif de communications selon l'une quelconque des revendications précédentes, comprenant un générateur de messages destiné à générer un message de texte.

12. Dispositif de communications selon l'une quelconque des revendications précédentes qui est un dispositif mobile.

13. Dispositif de communications selon l'une quelconque des revendications 1 à 11, qui est basé à l'intérieur d'un réseau de communications.

14. Dispositif de communications selon la revendication 13 comprenant un serveur.

15. Dispositif de communications selon l'une quelconque des revendications précédentes comprenant une base de données destinée à mémoriser une pluralité de gabarits de synthèse de la parole.

16. Dispositif de communications selon la revendication 15, dans lequel la base de données est conçue pour mémoriser des identificateurs qui correspondent chacun à un gabarit de synthèse de la parole et à une source.

17. Dispositif de communications selon l'une quelconque des revendications précédentes qui est capable de transmettre des données sur une liaison de communications de données sans fil.

18. Système de communications comprenant un dispositif de communications et un réseau de communications, le système de communications comprenant :
une mémoire destinée à mémoriser une pluralité de gabarits de synthèse de la parole destinés à synthétiser de la parole, les gabarits comprenant des ensembles respectifs de caractéristiques de paroles préparés conformément aux voix d'individus spécifiques respectives,
un gestionnaire de messages destiné à recevoir un message de texte d'un expéditeur en même temps qu'un identificateur identifiant au moins un gabarit de synthèse de la parole qui doit être utilisé pour convertir le message de texte en parole synthétisée,
un synthétiseur de la parole destiné à convertir le message de texte en parole synthétisée en utilisant le au moins un gabarit de synthèse de la parole identifié, et
une sortie destinée à procurer la parole synthétisée sous une forme audible qui correspond à la voix de l'expéditeur.

19. Système de communications selon la revendication 18, comprenant des unités de synchronisation correspondantes dans le dispositif de communications et le réseau de communications pour permettre que des données mémorisées dans le réseau de communications soient synchronisées avec des données mémorisées dans le dispositif de communications.

20. Système de communications selon la revendication 18 ou la revendication 19, comprenant un gestionnaire de gabarits de synthèse de la parole destiné à recevoir une copie du au moins un gabarit de synthèse de la parole identifié.

21. Système de communications selon l'une quelconque des revendications 18 à 20, qui est capable de transmettre des données sur une liaison de communications de données sans fil entre le réseau de communications et le dispositif de communications.

22. Procédé de conversion d'un message de texte en parole synthétisée, le procédé comprenant les étapes consistant à :
mémoriser une pluralité de gabarits de synthèse de la parole destinés à synthétiser de la parole, les gabarits comprenant des ensembles respectifs de caractéristiques de paroles préparés conformément aux voix d'individus spécifiques respectives,
convertir un message de texte en parole synthétisée en utilisant le au moins un gabarit de synthèse de la parole identifié, le message de texte ayant été reçu d'un expéditeur en même temps qu'un identificateur identifiant au moins un gabarit de synthèse de la parole qui doit être utilisé pour convertir le message de texte en parole synthétisée, et
générer la parole synthétisée sous une forme qui correspond à la voix de l'expéditeur.

23. Procédé selon la revendication 22, dans lequel l'identificateur identifie la source du message de texte.

24. Procédé selon la revendication 22 ou la revendication 23, comprenant l'étape consistant à recevoir une copie du gabarit de synthèse de la parole identifié.

25. Procédé selon l'une quelconque des revendications 22 à 24, comprenant l'étape consistant à lire artificiellement le message de texte en parole synthétisée en utilisant le gabarit de synthèse de la parole identifié.

26. Procédé selon l'une quelconque des revendications 22 à 25 comprenant l'étape consistant à transmettre la parole synthétisée sur une liaison de communications de données.

27. Procédé selon l'une quelconque des revendications 22 à 26 comprenant l'étape consistant à envoyer un message de texte et une copie d'un gabarit de synthèse de la parole à un destinataire du message de texte.

28. Procédé selon l'une quelconque des revendications 22 à 27, comprenant l'étape consistant à transmettre des informations de synchronisation entre un dispositif de communications et un réseau de communications pour synchroniser les données conservées dans le dispositif de communications avec des données conservées dans le réseau de communications.

29. Procédé selon l'une quelconque des revendications 22 à 28 comprenant l'étape consistant à transmettre des données sur une liaison de communications de données sans fil.

30. Produit de programme informatique destiné à convertir un message de texte en parole synthétisée, lorsque ledit produit de programme informatique est exécuté sur un ordinateur, le produit de programme informatique comprenant :
un code exécutable par un ordinateur destiné à amener l'ordinateur à mémoriser une pluralité de gabarits de synthèse de la parole destinés à synthétiser de la parole, les gabarits comprenant des ensembles respectifs de caractéristiques de paroles préparés conformément aux voix d'individus spécifiques respectifs,
un code exécutable par un ordinateur destiné à amener l'ordinateur à recevoir un message de texte d'un expéditeur en même temps qu'un identificateur identifiant quel gabarit parmi la pluralité de gabarits de synthèse de la parole doit être utilisé pour convertir le message de texte en parole synthétisée,
un code exécutable par un ordinateur destiné à amener l'ordinateur à convertir le message de texte en parole synthétisée en utilisant un gabarit sélectionné parmi les gabarits de synthèse de la parole, et
un code exécutable par un ordinateur destiné à amener l'ordinateur à fournir en sortie la parole synthétisée dans un signal devant être restitué sous une forme audible qui correspond à la voix de l'expéditeur.

31. Produit de programme informatique selon la revendication 30, qui est mémorisé sur un support lisible par un ordinateur.
